# EUROPEAN PATENT APPLICATION

(11) **EP 4 529 190 A1**
(43) Date of publication of application: **26.03.2025**
(21) Application number: 23862409.2
(22) Date of filing: 06.09.2023
(51) Int. Cl.: H04N 21/431

(54) **MEDIA CONTENT PLAYING METHOD AND APPARATUS, AND DEVICE, STORAGE MEDIUM AND PROGRAM PRODUCT**

(30) Priority: 06.09.2022 CN 202211084439
(71) Applicant: Beijing Zitiao Network Technology Co., Ltd., Beijing 100190 (CN)
(72) Inventor: ZHENG, Ziyang, Beijing 100028 (CN); YAN, Yilan, Beijing 100028 (CN); LI, Yaping, Beijing 100028 (CN)
(74) Representative: Dentons UK and Middle East LLP
(86) International application number: PCT/CN2023/117132
(87) International publication number: WO 2024/051715

(57) **Abstract**

The present disclosure relates to a media content playing method and apparatus, and a device, a storage medium and a program product. The method comprises: displaying first media content in a first playing mode and on a content display page; when the first media content belongs to a first media content set, in response to a second playing mode enabling operation triggered on the content display page, acquiring second media content from the first media content set; displaying the first media content in a second playing mode and on the content display page; and in response to having received a media content switching instruction, displaying, on the content display page, the second media content corresponding to the media content switching instruction. In the embodiments of the present disclosure, after a switch from the first playing mode to the second playing mode is made, a plurality of pieces of media content in a media content set are continuously played within the duration of the second playing mode by means of the corresponding media content switching instruction.

## Description

This application claims the priority of the Chinese patent application No. 202211084439.8 filed on September 06, 2022, the entire contents of which are incorporated herein by reference.

### TECHNICAL FIELD

Embodiments of the present disclosure relate to a media content playing method and apparatus, a device, a storage medium and a program product.

### BACKGROUND

With the continuous development of online audio-visual technology, short videos have achieved rapid development by network traffic. Video-based interactive social software has gradually become one of the commonly used social software in daily life of people, and its user scale is also expanding. Therefore, how to improve the viewing efficiency of video users has become an urgent problem to be solved.

### SUMMARY

In order to solve the above technical problem, embodiments of the present disclosure provide a media content playing method and apparatus, a device, a storage medium and a program product. After a first playing mode is switched to a second playing mode, a plurality of media contents in a media content set are continuously played through a corresponding media content switching command within the duration of the second playing mode, such that a user can conveniently carry out deep consumption on the contents in the media content set at the second playing mode. Therefore, the efficiency of user usage can be improved.

In a first aspect, the embodiments of the present disclosure provide a media content playing method, including:
displaying a first media content in a first playing mode on a content display interface;
in response to a second playing mode starting operation triggered on the content display interface, determining an associated media content subset meeting a preset relationship with the first media content in the first media content set, wherein the first media content belongs to a first media content set;
displaying the first media content in a second playing mode on the content display interface; and
within a duration of the second playing mode, in response to a media content switching command being received, displaying a second media content corresponding to the media content switching command in the content display interface, wherein the second media content belongs to the associated media content subset.

In a second aspect, the embodiments of the present disclosure provide a media content playing apparatus, including:
a first display module, configured to display a first media content in a first playing mode on a content display interface;
an associated media content subset determination module, configured to: in response to a second playing mode starting operation triggered on the content display interface, determine an associated media content subset meeting a preset relationship with the first media content in the first media content set, wherein the first media content belongs to a first media content set;
a second display module, configured to display the first media content in the second playing mode on the content display interface; and
a third display module, configured to, within a duration of the second playing mode, in response to a media content switching command being received, display a second media content corresponding to the media content switching command in the content display interface, wherein the second media content belongs to the associated media content subset.

In a third aspect, the embodiments of the present disclosure provide an electronic device, including:
one or more processors; and
a memory for storing one or more programs,
the one or more programs, when executed by the one or more processors, cause the one or more processors to implement the media content playing method according to any one of the first aspect.

In a fourth aspect, the embodiments of the present disclosure provide a computer-readable storage medium on which a computer program is stored, wherein the computer program, when executed by a processor, causes the processor to implement the media content playing method according to any one of the first aspect.

In a fifth aspect, the embodiments of the present disclosure provide a computer program product, including a computer program or command, wherein the computer program or command, when executed by a processor, causes the processor to implement the media content playing method according to any one of the first aspect.

### BRIEF DESCRIPTION OF DRAWINGS

The above and other features, advantages and aspects of each embodiment of the present disclosure will become more apparent with reference to the following detailed implementations in conjunction with the accompanying drawings. Throughout the accompanying drawings, the same or similar reference signs represent the same or similar elements. It is to be understood that the accompanying drawings are schematic and the originals and elements are not necessarily drawn to scale.
Fig. 1 is a schematic diagram of a media content playing scenario according to an embodiment of the present disclosure;
Fig. 2 is a flow schematic diagram of a media content playing method according to an embodiment of the present disclosure;
Fig. 3a is a schematic diagram of a content display interface in a first playing mode according to an embodiment of the present disclosure;
Fig. 3b is a schematic diagram of a content display interface in a second playing mode according to an embodiment of the present disclosure;
Fig. 4 is a schematic diagram of another content display interface in a second playing mode according to an embodiment of the present disclosure;
Fig. 5 is a structural schematic diagram of a media content playing apparatus according to an embodiment of the present disclosure; and
Fig. 6 is a structural schematic diagram of an electronic device according to an embodiment of the present disclosure.

### DETAILED DESCRIPTION

The embodiments of the present disclosure will be described in more detail below with reference to the accompanying drawings. Although certain embodiments of the present disclosure are shown in the accompanying drawings, it should be understood that the present disclosure may be implemented in various forms and should not be construed as limited to the embodiments set forth herein. Instead, these embodiments are provided for a more thorough and complete understanding of the present disclosure. It should be understood that the drawings and embodiments disclosed herein are for illustrative purposes only and are not intended to limit the scope of protection of the present disclosure.

It should be understood that the various steps described in the disclosed method implementations may be executed in different orders and/or in parallel. In addition, the method implementation may include additional steps and/or omit the steps shown. The scope of this disclosure is not limited in this regard.

The term "including" and its variations used in herein are open-ended, meaning "including but not limited to". The term "based on" means "based on at least in part". The term "an embodiment" means "at least one embodiment". The term "another embodiment" means "at least one further embodiment". The term "some embodiments" means "at least some embodiments". The relevant definitions of other terms will be provided in the following description.

It should be noted that the concepts such as "first" and "second" mentioned in herein are only used to distinguish different devices, modules, or units, and are not intended to limit the order or interdependence of the functions performed by these devices, modules, or units.

It should be noted that the modifications of "one" and "multiple" mentioned in herein are illustrative rather than restrictive, and those skilled in the art should understand that unless otherwise explicitly stated in the context, they should be understood as "one or more".

The names of messages or information exchanged between a plurality of apparatuses in the implementations of the present disclosure are only for illustrative purposes, and are not used for limiting the scope of these messages or information.

Before further describing the embodiments of the present disclosure in detail, the nouns and terms involved in the embodiments of the present disclosure are described, and are applicable to the following interpretations.

In response, it indicates the conditions or states on which the executed operation depends. In response to meeting the dependent conditions or states, one or more operations executed can be real-time or have a set delay; unless otherwise specified, there is no restriction on the order of execution of the plurality of operations executed.

At present, when users post or watch short videos through video social software on mobile terminals such as mobile phones, tablet computers and laptops, or other electronic devices, different users can achieve social interaction through the video social software. For example, the users can upload and post produced short videos through the video social software, and can also watch short videos posted by other users through the video social software, and perform operations such as like, comment, and forward on short videos, thereby achieving social interaction with other users.

There are usually two playing modes when watching video with the video social software, the first playing mode is that when playing the video, related information of the video is displayed on a content display interface, such as a poster head portrait, a like control, a comment control, a forward control and background music information. However, in the first playing mode, the content display interface displays more video related information, which may affect the watching efficiency of the user, for example, an interactive control covers key information in the video. In order to improve the use efficiency of the user, the second playing mode is generated, and in the second playing mode, a part of interactive controls will be hidden in the content display interface, for example, the interactive controls such as like, comment and author head portrait are hidden under the condition that the display position and size of a media content picture in the first playing mode are kept, and therefore the effect of screen-clear playing is achieved.

The set can be a plurality of media contents with associated contents, or a plurality of associated media contents posted by the same author. In related technologies, for example, a video A and a video B are two videos in the video set. In response to that the video A is played in the first playing mode, and the user wants to achieve the screen-clear playing effect, a second playing mode starting operation can be executed, and then the video A is played in the second playing mode. In the second playing mode, in response to that the first playing mode is not switched back after the video A has finished playing, the video A will be played in the loop playback manner under the second playing mode. In response to that the user is interested in the video set including the video after the video A has finished playing, the user needs to manually return to the first playing mode to acquire the video B in the video set, and at the moment, in response to that the user still wants to play in a screen-clear mode, the second playing mode starting operation needs to be executed again, and then the video B is played in the second playing mode. The whole operation process is tedious and complex.

In order to solve the above technical problems, an embodiment of the present disclosure provides a media content playing method, which includes: displaying a first media content in a first playing mode on a content display interface; in response to a second playing mode starting operation triggered on the content display interface, determining an associated media content subset meeting a preset relationship with the first media content in the first media content set, wherein the first media content belongs to a first media content set; displaying the first media content in the second playing mode on the content display interface; and within the duration of the second playing mode, in response to a media content switching command being received, displaying a second media content corresponding to the media content switching command in the content display interface. The associated media content subset meeting the preset relationship with the first media content may be a plurality of media contents in the set, which are close to the current first media content in sequence.

In response to that the user enters the second playing mode to carry out screen-clear immersive viewing the media content, the user may have a deep consumption intention for the current video. According to the embodiments of the present disclosure, after the first playing mode is switched to the second playing mode, the plurality of media contents in the media content set are continuously played through the corresponding media content switching command within the duration of the second playing mode, so that the user can conveniently carry out deep consumption on the contents in the set at the second playing mode. Therefore, the efficiency of user usage can be improved.

The embodiments of the present disclosure will be described in detail below with reference to the accompanying drawings. It is to be noted that the same reference signs in different accompanying drawings are used for referring to the described same elements.

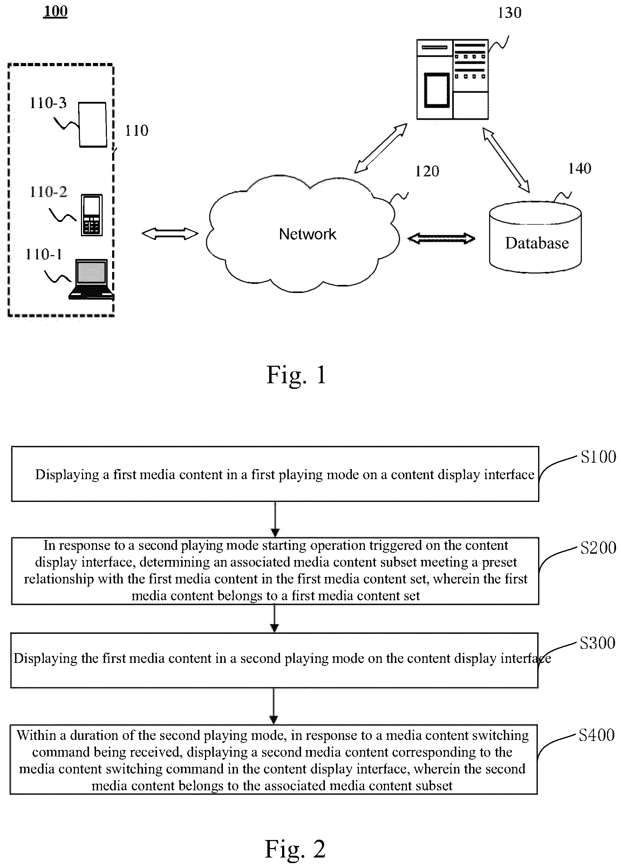

Fig. 1 is a system for implementing the media content playing method provided by the embodiments of the present disclosure. As shown in Fig. 1, the system 100 can include a plurality of user terminals 110, a network 120, a server 130 and a database 140. For example, the system 100 can be used for implementing the media content playing method described in any embodiment of the present disclosure.

It is to be understood that the user terminal 110 may be any other type of electronic device capable of performing data processing, which may include but is not limited to: a mobile phone, a station, a unit, a device, a multimedia computer, a multimedia tablet, an Internet node, a communicator, a desktop computer, a laptop computer, a notebook computer, a netbook computer, a tablet computer, a personal communication system (PCS) device, a personal navigation device, a personal digital assistant (PDA), an audio/video player, a digital camera/camcorder, a positioning device, a television receiver, a radio broadcast receiver, an e-book device, a gaming device, or any combination thereof, including accessories and peripherals of these devices or any combination thereof.

The user can operate through the application installed on the user terminal 110, and the application transmits the user behavior data to the server 130 through the network 120. The user terminal 110 can also receive the data transmitted by the server 130 through the network 120. The embodiments of the present disclosure have no restrictions on the hardware system and software system of the user terminal 110. For example, the user terminal 110 can be based on processors such as ARM and X86, can have input/output devices such as a camera, a touch screen, and a microphone, and can run operating systems such as Windows, iOS, Linux, Android, and Harmony OS.

For example, the application on the user terminal 110 can be a short video social application, for example, a short video social application based on multimedia resources such as videos, pictures and texts. Taking the short video social application based on the multimedia resources such as video, picture and text as an example, the user can post videos on the user terminal 110 through the short video social application, moreover, the user can watch or browse the videos posted by other users, and carry out operations such as like, comment and forward.

The user terminal 110 can implement the media content playing method provided by the embodiment of the present disclosure in a manner of running a process or a thread. In some examples, the user terminal 110 can execute the media content playing method by the built-in application. In other examples, the user terminal 110 can execute the media content playing method by calling the application stored at the outside of the user terminal 110.

The network 120 can be a single network, or a combination of at least two different networks. For example, the network 120 can include but is not limited to one or a combination of a local area network, a wide area network, a public network, a private network and the like. The network 120 can be a computer network such as Internet and/or various telecommunication networks (such as a 3G/4G/5G mobile communication network, a WIFI, Bluetooth, and ZigBee), which is not limited in the embodiment of the present disclosure.

The server 130 can be a single server, or a server group, or a cloud server, and each server in the server group is connected through a wired or wireless network. One server group can be centralized, such as a data center, or distributed. The server 130 can be local or remote. The server 130 can communicate with the user terminal 110 through the wired or wireless network. The embodiment of the present disclosure does not limit the hardware system and software system of the server 130.

The database 140 can generally refer to a device with a storage function. The database 140 is mainly used for storing various data utilized, generated and outputted by the user terminal 110 and the server 130 in work. For example, taking the application on the user terminal 110 as the media content playing application based on the multimedia resources such as video, picture and audio as an example, the data stored in the database 140 can include resource data such as video and audio uploaded by the user using the user terminal 110, and interactive operation data such as like and comment.

The database 140 can be local or remote. The database 140 can include various memories, such as a Random Access Memory (RAM), and a Read Only Memory (ROM). There are only some examples of the above storage device, and the storage device which can be used by the system 100 is not limited to this. The embodiment of the present disclosure does not limit the hardware system and software system of the database 140, for example, it can be a relationship database or non-relationship database.

The database 140 can be in connection or communication with the server 130 or a part of the server 130 through the network 120, or directly in connection or communication with the server 130, or the combination of the two modes is adopted.

In some examples, the database 140 can be an independent device. In other examples, the database 140 can also be integrated in at least one of the user terminal 110 and the server 130. For example, the database 140 can be arranged on the user terminal 110 and can also be arranged on the server 130. For another example, the database 140 can also be distributed, one part of the database 140 is arranged on the user terminal 110, and the other part of the database 140 is arranged on the server 130.

Fig. 2 is a flowchart of a media content playing method according to an embodiment of the present disclosure, the embodiment can be applied to a video playing situation, the method can be executed by the media content playing apparatus, the media content playing apparatus can be implemented in a software and/or hardware mode, and the media content playing method can be executed by the user terminal 110 in Fig. 1.

As shown in Fig. 2, the media content playing method provided by the embodiments of the present disclosure mainly includes steps S100-S400.

S100: displaying a first media content in a first playing mode on a content display interface.

The media content can be the multimedia resources such as picture, video and live streaming, and the first media content is the media content which is being displayed in the first playing mode on the content display interface. The content display interface can be an interactive interface provided by the social application or software on the user terminal 110, and the interactive interface can be used as a display interface for displaying visual information of the media content to the user (namely, the user of the user terminal 110), and can also be used for receiving the operation executed by the user in the interactive interface.

In one implementation of the present disclosure, taking the user terminal 110 being the smart phone or tablet computer as an example, the content display interface can occupy the whole display screen of the smart phone or tablet computer, that is, the content display interface is the whole display interface of the smart phone or tablet computer. For example, taking the user terminal 110 being the notebook computer as an example, the content display interface can occupy the whole display screen of the notebook computer or only occupy part of the display screen of the notebook computer. For example, taking the media content being the video as an example, the video can be played on the content display interface, so that the user watches the video through the content display interface. For another example, taking the media content being the picture as an example, one or more pictures can be displayed on the content display interface, and the user can browse the pictures at the same time or respectively through the content display interface.

In one implementation of the present disclosure, in the first playing mode, the content display interface includes a first interactive control which is used for executing a first type interactive operation, and the first type interactive operation includes an interactive operation for the media content or between users associated with the media content. That is, online interactive operations are carried out among a plurality of users (namely, a plurality of users of different user terminals 110) of different user terminals 110, so as to realize information interaction among the plurality of users. For example, data generated by the online interactive operation needs to be uploaded and stored in the server 130 to realize data transmission and interaction between different user terminals 110 and the server 130. For example, taking the media content playing method provided by the present disclosure applied to the video social software as an example, the online interactive operation may include operations such as like, collect, comment and forward on the short video watched by the user using the video social software.

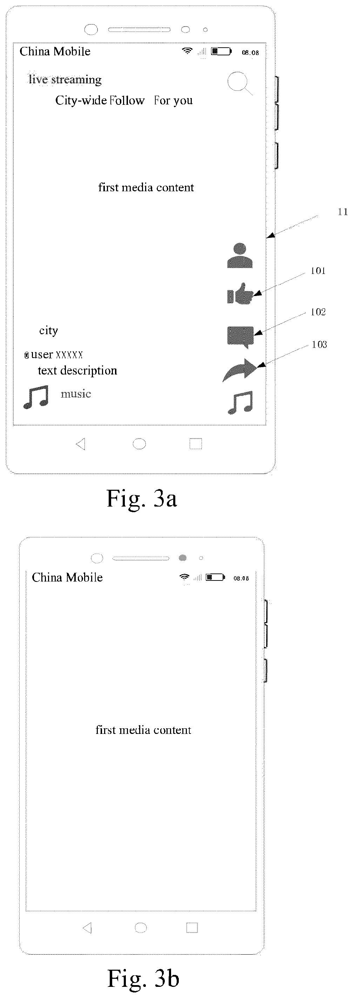

As shown in Fig. 3a, in the first playing mode, the content display interface 11 includes 3 first interactive controls, the first interactive control 101 and the first interactive control 103 can be used for executing the first type interactive operation based on the video, for example, the first interactive control 101 and the first interactive control 103 are used for executing like and forward operations on the video respectively. The first interactive control 102 can be used for executing the interactive operation between the users associated with the video, for example, the users associated with the video can include a user posting the video (such as a video poster), and a user watching the video. For example, on the content display interface 11, by clicking the first interactive control 102, a comment interface related to the video can be displayed on the content display interface 11, and the user can interact with the user posting the video or other users watching the video in the comment interface in a mode such as a message.

In one implementation of the present disclosure, in the first playing mode, as shown in Fig. 3a, the content display interface 11 can also include other interactive controls different from first interactive controls 101-103 or interaction areas under the first displaying mode, and thus the user can perform other interactive operations on a target object display interface 11 under the first displaying mode.

For example, as shown in Fig. 3a, in the first playing mode, the content display interface includes a video information display area, and the video information display area is used for displaying data information of the video, such as text description about the video, the video poster and other data information related to the video.

For example, as shown in Fig. 3a, in the first playing mode, the content display interface includes an audio information interaction area, and the audio information interaction area is used for displaying audio information about the video. The audio information of the video is displayed in a single-line text mode in a rolling way at the audio information interaction area, and the user can acquire all the audio information about the video by, for example, clicking the audio information interaction area. For example, after the user clicks the audio information interaction area, all the audio information about the video is displayed on the content display interface.

For example, as shown in Fig. 3a, in the first playing mode, the content display interface includes a position information interaction area, and the position information interaction area provides geographical position information about the video poster. For example, the city information of the video poster can be directly displayed in the position information interaction area. The user can acquire more detailed geographic position information about the video poster by, for example, clicking the position information interaction area, for example, after the user clicks the position information interaction area, the detailed geographic position information of the video poster can be displayed on the content display interface 11.

For example, as shown in Fig. 3a, in the first playing mode, the content display interface includes a personal information interaction area of the video poster, and the personal information interaction area provides personal information about the video poster. For example, a head portrait used by the video poster in social software is displayed in the personal information interaction area. The user can acquire more detailed personal information about the video poster by, for example, clicking the personal information interaction area. For example, after the user clicks the personal information interaction area, the detailed personal information of the video poster can be displayed on the content display interface 11, or the user can click the personal information interaction area to enter other associated display interfaces so as to acquire the detailed personal information about the video poster.

For example, as shown in Fig. 3a, in the first playing mode, the end of the content display interface 11 further includes a plurality of different interactive controls, for example: "home", "friend", "+", "message" and "me", so that the user can enter other information display interfaces of the social software through the different interactive controls.

For example, as shown in Fig. 3a, in the first playing mode, the top of the content display interface further includes a plurality of different interactive controls, such as "live streaming", "City-wide", "Follow" and "For you", so that the user can enter other information display interfaces of the social software through the different interactive controls.

It is to be noted that in other examples, the content display interface in the first playing mode can further include other interactive controls, interaction areas or display information and the like, which are not specifically limited in the embodiments of the present disclosure.

As shown in Fig. 3a, the first media content is displayed in the content display interface in a full-screen mode, and the first interactive controls 101-103 are displayed on the first media content picture. Therefore, part of the area of the first media content picture is covered by the first interactive controls 101-103. Consequently, the user cannot watch the complete first media content picture.

S200: in response to a second playing mode starting operation triggered on the content display interface, determining an associated media content subset meeting a preset relationship with the first media content in the first media content set, wherein the first media content belongs to the first media content set.

The media content set can include a set of a plurality of media contents of the same type. The same type can refer to the same theme of the media content, for example, food discovery, clothes evaluation or the same episode. The media content in the media content set can be the media content posted by the same user, or the media content posted by a plurality of different users. The embodiment of the present disclosure does not make specific limitation. The first media content set refers to a set of the first media content.

The second media content can refer to any other media content except the first media content in the first media content set. For example, the first media content set includes a media content A, a media content B, and a media content C. The media content A, the media content B and the media content C belong to the first media content set. In response to that the media content B is the first media content, the media content A and the media content C can be used as the associated media content subsets of the first media content.

The second playing mode starting operation can be understood as an operation for indicating the user terminal 110 to display the media content in the second playing mode. The second playing mode can be used for switching the content display interface from the first playing mode to the second playing mode. After the second playing mode starting operation carried out by the user on the content display interface is received, the first media content is displayed on the content display interface in the first playing mode and is switched to the second playing mode to be displayed on the content display interface.

The second playing mode starting operation can be a touch operation directly carried out by the user on the content display interface in a touch mode such as finger and touch pen, or can also be a control operation such as single click or double click carried out by the user on the content display interface through external input devices such as a mouse and a keyboard. The embodiments of the present disclosure do not limit specific implementation of the second playing mode starting operation.

For example, taking the second playing mode starting operation being the touch operation carried out on the content display interface based on touch points as an example, the second playing mode starting operation can be set to be that one or more touch points in a touch area of the content display interface are triggered, or can be further set to be that one or more touch points in the touch area of the content display interface are triggered and move in a preset direction or a preset path. For example, in response to that the user terminal 110 detects that one touch point in the touch area of the content display interface is triggered and moves in a preset direction such as left, right, up or down, it is determined that the second playing mode starting operation is received; or, in response to that the user terminal 110 detects that a plurality of touch points in the touch area of the content display interface are triggered and move along a plurality of paths in preset directions to which the touch points deviate from each other, are close to each other or are parallel to each other, it is determined that the second playing mode starting operation is received; or, in response to that the user terminal 110 detects that the plurality of touch points in the touch area of the content display interface are triggered and move into a preset area in the touch area, it is determined that the second playing mode starting operation is received. According to the embodiment of the present disclosure, the second playing mode starting operation in the touch operation mode is simply described, and the specific implementation is not limited.

In one implementation of the present disclosure, determining the associated media content subset meeting the preset relationship with the first media content in the first media content set, includes: determining and loading a first preset number of media contents included in the first media content set, in which the first preset number of media contents includes the associated media content subset.

The first preset number can be set according to actual conditions, for example, it can be set to 6 or 8. Further, in response to that the first media content set includes media contents exceeding the first preset number, the first preset number of media contents is loaded, and in response to that the number of media contents in the first media content set does not exceed the first preset number, all media contents in the first media content set are loaded. For example, it is assumed that the first preset number is 8, and in response to that the first media content set includes 100 media contents, 8 media contents in the first media content set are loaded. In response to that the first media content set includes 6 media contents, all media contents in the first media content set are loaded, namely 6 media contents. Therefore, in response to that the user watches other media contents in the first media set, switching can be rapidly carried out, and the problem of jamming caused by temporarily loading the media contents from the server when the user watches other media contents is avoided.

Further, in response to that the first media content set includes media content exceeding the first preset number, the media content to be loaded is determined according to the position of the first media content in the first media content set. Specifically, in response to that the first media content set includes media contents exceeding the first preset number, the loaded media content is media content adjacent to or similar to the first media content.

For example, it is assumed that the first preset number is 8, 4 media contents located before the first media content can be loaded, and 4 media contents located after the first media content can be loaded. Further, in response to that the first media content is at the 9^{th} position in the first media content set, 4 media contents at the 5^{th} position to 8^{th} position located before the first media content are loaded, and moreover, 4 media contents at the 10^{th} position to the 13^{th} position located after the first media content are loaded. In this way, no matter whether the user switches the media content forwards or backwards, there are media contents that are pre-loaded, thus, the problem of playing delay can be avoided, and the fluency of media content playing can be improved.

S300: displaying the first media content in the second playing mode on the content display interface.

In one implementation of the present disclosure, the first playing mode may refer to a normal playing mode, and the second playing mode may refer to a screen-clear playing mode. During the duration of the second playing mode, at least one first interactive control on the first media content picture is hidden in the content display interface. For example, the first interactive controls 101-103 shown in Fig. 3a are hidden and not displayed any more. Therefore, the first media content picture is not covered by the first interactive control, the user can acquire all picture information of the first media content more accurately and visually, and a first media content picture area is not changed in the second playing mode. In the second playing mode, the content display interface can further include other data information related to the first media content, and therefore the user can quickly acquire related information about the first media content and execute corresponding interactive operation. It is to be understood that in response to that the first playing mode is switched to the second playing mode, the position and the size of the media content picture can be kept unchanged.

In one implementation of the present disclosure, hiding the first interactive control on at least one first media content picture in the content display interface, includes: hiding all components displayed on the first media content picture in the first playing mode in the content display interface, in which the components include the first interactive control.

In the embodiments of the present disclosure, as shown in Fig. 3b, the first interactive controls 101-103 as shown in Fig. 3a are hidden and not displayed any more, and moreover, a video information display area, an audio information interaction area, a position information interaction area and a personal information interaction area, a plurality of different interactive controls at the bottom of the content display interface, and a plurality of different interactive controls included at the top of the content display interface as shown in Fig. 3a are hidden and not displayed any more. Therefore, the media content picture is not covered by any interactive component, the media content picture is displayed in the content display interface in a full-screen mode, and the user can acquire all picture information of the first media content more accurately and visually.

It is to be noted that, in the second playing mode, the above displaying mode is adopted no matter whether the first media content or other media content except the first media content is displayed in the content display interface. In the embodiments of the present disclosure, the first media content is only used as an example for description, but not used as a limitation.

In response to that the first playing mode is switched to the second playing mode, the display picture of first media content is continuously played. For example, in the process of switching from the first playing mode to the second playing mode, the display state of the media content is not changed. For example, taking the media content being the video as an example, in the displaying mode switching process, the playing state, pause state, playing rate, playing volume, picture definition and the like of the video are not changed. For example, for the condition that the media content is a plurality of pictures, a synchronous displaying mode of simultaneously displaying the plurality of pictures in the content display interface and a single displaying mode of sequentially displaying each picture in the content display interface can be respectively adopted in different displaying modes; or, for the plurality of pictures, an automatic continuous playing mode, a manual selection playing mode and the like can be adopted in different displaying modes.

S400: within the duration of the second playing mode, in response to a media content switching command being received, displaying a second media content corresponding to the media content switching command in the content display interface, wherein the second media content belongs to the associated media content subset.

That within the duration of the second playing mode can be understood as that the user terminal 110 continuously displays the media content in the second playing mode and is not switched to other playing modes.

The media content switching command can be understood as a command for indicating the user terminal to switch to display other media contents on the content display interface. The second media content refers to the switched media content. The second media content is determined by a media identifier carried by the media content switching command, and the media identifier carried by the media content switching command is determined by a specific operation of the user in the content display interface.

In the embodiment of the present disclosure, after one media content is played, the media content switching command is automatically generated and received, so that the user terminal is controlled to display the second media content in the content display interface.

In the embodiment of the present disclosure, in response to a preset trigger operation on the content display interface being detected by the user terminal, a media content switching command are determined as being received, and in response to the media content switching command, the user terminal is controlled to display the second media content in the content display interface.

An embodiment of the present disclosure provides a media content playing method, which includes: displaying the first media content in the first playing mode on the content display interface; in a case where the first media content belongs to the first media content set, in response to the second playing mode starting operation triggered on the content display interface, determining the associated media content subset meeting the preset relationship with the first media content in the first media content set; displaying the first media content in the second playing mode on the content display interface; and within the duration of the second playing mode, in response to receiving the media content switching command, displaying the second media content corresponding to the media content switching command in the content display interface. According to the embodiments of the present disclosure, after the first playing mode is switched to the second playing mode, the plurality of media contents in the media content set are continuously played through the corresponding media content switching command within the duration of the second playing mode, so that the user can conveniently carry out deep consumption on the contents in the set in the second playing mode, and the use efficiency of the user is improved.

On the basis of the above embodiments, the controls displayed on the content display interface in the second playing mode are further optimized, specifically,
In one implementation of the present disclosure, in the second playing mode, the content display interface includes a second interactive control different from the first interactive control, the second interactive control is used for executing a second type interactive operation, and the second type interactive operation includes an adjustment operation corresponding to a playing attribute in the second playing mode. The second interactive control can be arranged outside the media content picture, so that the media content picture is prevented from being covered.

According to the embodiments of the present disclosure, under the second playing mode, the content display interface includes the second interactive control and does not include the first interactive control, which is conducive to achieving different interactive operations in the first playback mode and the second playback mode respectively, such that different interactive functions can be provided to users in the first playback mode and the second playback mode, thereby better meeting the diverse interactive needs of users in different display modes.

In the embodiments of the present disclosure, under the second playing mode, the second interactive control can be used for executing adjustable operation (such as display position, display scale, and display angle) for changing display information of the media content, and can also be used for executing interactive operation such as storing part of information or all information of the media content on the user terminal 110. For example, data generated by the local interactive operation can be not required to be uploaded to and stored in the server 130. For example, by taking the application of the media content playing method provided by the present disclosure to the video social software as an example, the local interactive operation can include adjustment operation of the user on the short video such as playing interface, playing rate, playing volume and the like during watching the short video with the video social software, or can also include acquisition operation such as download, image interception and the like on the video.

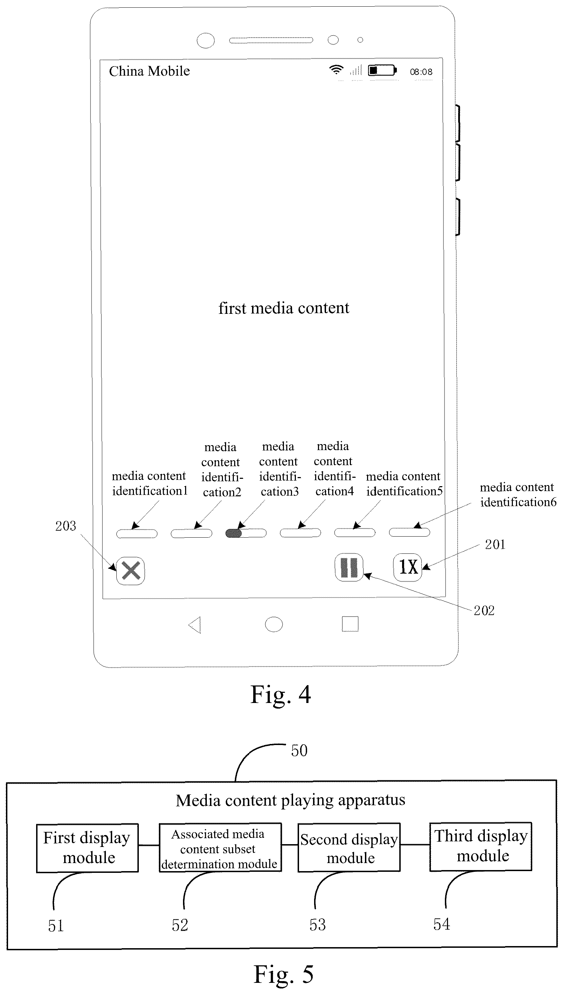

For example, as shown in Fig. 4, in the second playing mode, the content display interface includes a second interactive control 201 and a second interactive control 202, and the second interactive control 201 and the second interactive control 202 can be used for executing the adjustment operation on media content display information, for example, the second interactive control 201 is a playing rate adjustment control, in the content display interface, by clicking the second interactive control 201, a plurality of playing rate areas related to the video can be displayed in the content display interface, and the user can select a corresponding playing rate in the playing rate areas to control the playing rate of media content. The second interactive control 202 is a pause control, under the condition that the media content is played on the content display interface, the second interactive control 202 is clicked, thus the media content is paused in the content display interface, and under the condition that the media content is paused in the content display interface, the second interactive control 202 is clicked, and the media content can be continuously played in the content display interface.

In one implementation of the present disclosure, displaying the first media content in the second playing mode on the content display interface, includes: displaying a second preset number of media content identifiers corresponding to the associated media content subset in the content display interface, in which the display sequence of the media content identifiers is determined by the sequence of the corresponding media content in the first media content set.

The second preset number can be set according to actual conditions, the second preset number and the first preset number can be the same or different, which is not specifically limited in the embodiment of the present disclosure. As shown in Fig. 4, in the embodiment of the present disclosure, the second preset number being 6 is taken as an example for display. The media content identifier can be used for displaying other media contents in the media content set associated with the first media content in an aggregation form.

In one implementation of the present disclosure, in response to that the media content included in the media content set is smaller than the second preset number, the number of the media content identifiers included in the content display interface is the actual number of media contents included in the media content set. For example, in response to that the media content set only includes an upper set of media contents and a lower set of media contents, only two media content identifiers are displayed in the content display interface. In the second playing mode, the plurality of media content identifiers are displayed in an aggregated form in the content display interface to prompt the user to switch media content in the second playing mode, so as to improve the use efficiency of the user.

In the embodiments of the present disclosure, the plurality of media content identifiers are displayed at the bottom of the content display interface and above the second interactive control to minimize the obstruction of the media content screen as much as possible.

Further, in response to that an operation of the user on the content display interface is not detected by the user terminal within a preset time length, the second interactive control and the media content identifier in the content display interface can be hidden. After a click operation of the user on the content display interface is detected by the user terminal, the second interactive control and the media content identifier are displayed in the content display interface to facilitate the user's operation.

In one implementation of the present disclosure, corresponding media content identifiers are sequentially displayed at the bottom of the content display interface from left to right according to the sequence of media contents in the media content set.

For example, as shown in Fig. 4, the media content identifiers 1-6 respectively correspond to the media contents A-F, and the media contents A-F are 6 media contents sequentially arranged in the media content set.

In one implementation of the present disclosure, as shown in Fig. 4, the content display interface also includes a second playing mode closing control, in which the second playing mode closing control can be used for closing the second playing mode and starting the first playing mode in response to the trigger operation of the user. That is, after the user terminal detects the trigger operation on the second playing mode closing control, the media contents are displayed in the first playing mode.

On the basis of the above embodiments, a method for determining whether a media content switching command is received is further optimized in the embodiments of the present disclosure.

In one implementation of the present disclosure, the media content switching command being received includes: in response to a first media content playing completion command, the media content switching command is generated and received.

In the embodiments of the present disclosure, after the user terminal detects that the first media content is completed to play, the first media content playing completion command is generated and received, and the media content switching command is generated and received in response to the first media content playing completion command. After it is detected that the first media content is completed to play, it can include that the playing time length of the first media content is equal to the total time length of the first media content. At the moment, the second media content corresponding to the received media content switching command is behind the first media content and is adjacent to the first media content.

For example, the total time length of the first media content is 3 minutes; after it is detected that the playing duration of the first media content is 3 minutes, the media content switching command is automatically generated, and in response to the media content switching command, the second media content behind the first media content is played, for example, in response to that the first media content is at the 9^{th} position in the first media content set, the media content at the 10^{th} position in the first media content set is the second media content.

In one implementation of the present disclosure, the media content switching command being received includes: in response to the trigger operation on the content display interface, the media content switching command being received.

The trigger operation can be a touch operation directly carried out on the content display interface by the user in the touch mode such as finger and touch pen, or the user can carry out control operations such as single click or double click on the content display interface through the external input devices such as the mouse and keyboard, and the embodiment of the present disclosure does not limit the specific implementation of the trigger operation.

In one implementation of the present disclosure, in response to the trigger operation on the content display interface, the media content switching command being received, includes: in response to a slide operation on the content display interface in a first preset direction, the media content switching command being received.

In the embodiment of the present disclosure, the first preset direction is a transverse direction which refers to a direction parallel to the top and bottom of the content display interface, namely a horizontal direction. The slide operation on the content display interface in the first preset direction includes: a transversely leftward slide operation on the content display interface, or a transversely rightward slide operation in the content display interface. In the transversely leftward slide operation, the received media content switching command is used for indicating to treat the previous media content of the first media content as the second media content; and in the transversely rightward slide operation, the received media content switching command is used for indicating to treat the next media content of the first media content as the second media content.

For example, when the user terminal detects the rightward slide operation on the content display interface, the next media content of the first media content is treated as the second media content and is displayed on the content display interface. When the user terminal detects the leftward slide operation on the content display interface, the previous media content of the first media content is treated as the second media content and is displayed on the content display interface.

In one implementation of the present disclosure, in response to the trigger operation on the content display interface, the media content switching command being received, includes: in response to the trigger operation on the media content identifier included in the content display interface, the media content switching command being received, in which the media content identifier corresponds to the media content in the first media content set.

In the embodiments of the present disclosure, the trigger operation on the media content identifier may refer to a clicking operation on the media content identifier. Further, the media content identifier can also be used for switching to the corresponding media content in response to the trigger operation of the user. Specifically, in the content display interface, the media content identifier can be clicked to display the second media content corresponding to the media content identifier in the content display interface. For example, in the process of displaying the media content A on the content display interface, the user terminal detects the trigger operation of the user on the media content identifier 6, acquires the media content F corresponding to the media content identifier 6, and displays the media content F on the content display interface in the second playing mode. Therefore, the corresponding media content can be displayed in the content display interface through the trigger operation on the media content identifier, so that the user can conveniently and quickly switch to the media content to be watched.

On the basis of the above embodiments, the media content identifier is further optimized in the embodiments of the present disclosure.

In one implementation of the present disclosure, the media content identifier is used for displaying the playing progress of the corresponding media content.

The playing progress of the corresponding media content is represented on the media content identifier in a form of a progress bar. The length of the progress bar is determined by the played time length of the media content. Specifically, the ratio of the progress bar to the total length of the media content identifier is the same as the ratio of the played time length of the media content to the total time length of the media content. For example, as shown in Fig. 4, the media content identifier 1 corresponds to the media content A. In response to that the total time length of the media content A is 4 minutes, and the played time length is 1 minute, the progress bar accounts for 1/4 of the whole media content identifier.

In the embodiment of the present disclosure, with the continuous increase of the played time length of the media content, the proportion of the progress bar in the whole media content identifier is continuously increased. Therefore, the user can conveniently obtain the playing progress of the media content so as to assist the user in selection.

In one implementation of the present disclosure, in response to that the first media content is switched to the second media content for display in the content display interface, the first media content is in a pause state. That is, in response to that the second media content is switched to the first media content again in the content display interface, the first media content is continuously played. For example, in the content display interface, after the first media content is played for 1 minute and 3 seconds, the user carries out the trigger operation on the content display interface to switch to the second media content; and in the process of displaying the second media content in the content display interface, the user terminal detects the trigger operation on the content display interface again, and the second media content is switched to the first media content, so that the first media content is played from 1 minute and 3 seconds in the content display interface.

On the basis of the above embodiments, after the first media content is switched to the second media content in the content display interface, the first media content is in the pause state, and at the moment, the progress bar in the media content identifier corresponding to the first media content is also in the pause state. After it is switched to the first media content again, the first media content is continuously played, and the progress bar corresponding to the first media content changes along with the playing time length again.

In one implementation of the present disclosure, in response to that the media content displayed in the content display interface is the media content corresponding to the target media content identifier, a new media content identifier is acquired and displayed in response to receiving a media content identifier updating command; the target media content identifier is a first media content identifier in the current content display interface, or the last media content identifier in the current content display interface. That the media content identifier updating command being received includes: in response to the slide operation on the content display interface in the first preset direction, the media content identifier updating command being received; or after receiving a playing completion command for a media content corresponding to the target media content identifier, the media content identifier updating command being generated and received.

In the embodiments of the present disclosure, in the second playing mode, in response to that the user terminal detects that target media content displayed in the media content display interface is the media content corresponding to the last media content identifier, and after the target media content is detected to be completed to display, the media content identifier updating command is automatically generated and received, and the new media content identifier is acquired and displayed.

For example, as shown in Fig. 4, the media content identifier 6 is the last media content identifier in the content display interface; in response to that the media content being played in the content display interface is the media content F corresponding to the media content identifier 6, after the user terminal detects that the media content F is completed to play, the user terminal automatically generates and receives the media content identifier updating command, acquires the media content identifier 7 corresponding to the media content G behind the media content F, and displays the media content identifier 7 in the content display interface.

In the embodiment of the present disclosure, in the second playing mode, in response to that the user terminal detects that the target media content displayed in the media content display interface is the media content corresponding to the last media content identifier, and detects the execution of the transversely leftward slide operation on the content display interface, the media content identifier updating command is received, and the new media content identifier is acquired and displayed.

For example, as shown in Fig. 4, the media content identifier 6 is the last media content identifier in the content display interface; in response to that the media content being played in the content display interface is the media content F corresponding to the media content identifier 6, the user terminal detects the execution of the transversely leftward slide operation on the content display interface, receives the media content identifier updating command, acquires the media content identifier 7 corresponding to the media content G behind the media content F, and displays the media content identifier 7 in the content display interface.

Further, in the embodiment of the present disclosure, in the process of displaying the media content identifier 7 in the content display interface, other media content identifiers (such as media content identifiers 2-6 shown in Fig. 4) in the content display interface are controlled to move leftwards by one bit in sequence, and meanwhile, the media content identifier 1 is not displayed in the content display interface any more.

In the embodiments of the present disclosure, in the second playing mode, in response to that the user terminal detects that target media content displayed in the media content display interface is the media content corresponding to the first media content identifier, the media content identifier corresponding to media content in front of the media content corresponding to the first media content identifier is acquired and displayed. The specific implementation mode is the same as the implementation mode of the target media content provided in the above embodiment being the last media content identifier, and specifically can refer to the description in the above embodiment, which is not specifically limited in the embodiment of the present disclosure.

In the embodiments of the present disclosure, in response to that the target media content is the first media content in the media content set or the last media content in the media content set, the new media content identifier is not acquired and displayed any more.

In one implementation of the present disclosure, the method further includes: in response to that the number of media contents which are loaded and not played in the current media content set is smaller than a third preset number, loading a fourth preset number of media contents from the current media content set.

The third preset number is less than the first number, and the third preset number is less than the fourth preset number. The fourth preset number can be the same as the first preset number, and can also be different from the first preset number, which is not specifically limited in the embodiments of the present disclosure.

The current media content set, in the second playing mode, is the media content set to which the current media content played in the content display interface belongs. In the embodiments of the present disclosure, that the third preset number being 3 and the fourth preset number being 7 are taken as an example.

For example, in response to that the content display interface is switched from the first playing mode to the second playing mode, the first preset number (for example, 8) of media contents are loaded, and the media contents which are loaded and not displayed are continuously reduced along with continuous playing of the media contents by the user terminal in the second playing mode. In response to that the media contents which are loaded and not displayed are less than 3, a media content loading request is triggered, and the server is requested to load 7 media contents. Therefore, playing is carried out in a pre-loading mode, and the problem of jamming can be avoided.

On the basis of the above embodiment, an embodiment of the present disclosure provides a switching mode of a media content set.

In one implementation of the present disclosure, the method further includes: within the duration of the second playing mode, in response to the media set switching command being received, determining a second media content set corresponding to the media set switching command; acquiring a third media content included in the second media content set; and displaying the third media content in the content display interface.

The second media content set refers to other media content sets except the first media content set. The third media content can be any media content in the second media content set. Optionally, the third media content can be the first media content in the second media content set, and can also be the last media content watched in the second media content set when the user exits the user terminal last time. The media set switching command can be understood as a command for indicating the user terminal to switch to other media sets.

In the embodiment of the present disclosure, after the last media content in the first media content set is completed to display, the media set switching command is automatically generated and received to control the user terminal to acquire the media content in the second media set, and the third media content is displayed in the content display interface.

In the embodiments of the present disclosure, after the user terminal detects the preset trigger operation on the content display interface, the media set switching command is received, and in response to the media set switching command, the user terminal is controlled to acquire the media content in the second media set, and the third media content is displayed in the content display interface.

In one implementation of the present disclosure, the media set switching command being received includes: in response to a slide operation on the content display interface in a second preset direction, the media set switching command being received.

In the embodiments of the present disclosure, the second preset direction is a longitudinal direction, and the longitudinal direction refers to a direction parallel to the side edge of the content display interface, namely a vertical direction. The slide operation on the content display interface in the second preset direction includes: a longitudinally upward slide operation on the content display interface, or, a longitudinally downward slide operation on the content display interface. In the longitudinally upward slide operation, the received media set switching command is used for indicating to treat the next media content set of the first media content set as the second media content set; and in the longitudinally downward slide operation, the received media set switching command is used for indicating to treat the previous media content set of the first media content set as the second media content set.

It is to be noted that the type of the pervious media content set and the next media content set of the first media content set can be set according to a set recommendation mechanism of the user terminal, and the embodiments of the present disclosure do not limit the relationship between the second media content set and the first media content set. In other words, in response to that the user terminal detects that the user executes the upward slide operation on the content display interface, the user terminal acquires a media content set which is not the first media content set to serve as the second media content set; and similarly, in response to that the user terminal detects that the user executes the downward slide operation in the content display interface, the user terminal acquires a media content set which is not the first media content set to serve as the second media content set.

In one implementation of the present disclosure, the media set switching command being received includes: in response to the trigger operation on the media set control included in the content display interface, displaying a plurality of media set identifiers; and in response to the trigger operation on the media set identifiers, the media set switching command is determined as received.

In the embodiment of the present disclosure, in the second playing mode, the content display interface includes the media set control, the media set control can be used for displaying a media content set display area in the content display interface in response to the trigger operation of the user; a plurality of media set identifiers can be displayed in the media content set display area, and the media set identifiers can be displayed in a list form. The media set identifier can include a set name, a set content brief, a set cover graph and other information related to the media content set.

Further, the user can execute a vertical upward and downward slide operation in the media content set display area to control the media set identifier to move upwards and downwards for display, so that more media set identifiers can be displayed in a relatively small area.

In the embodiment of the present disclosure, in response to the trigger operation of the user on the media set identifier, the media set switching command is determined as being received by the user terminal.

In one implementation of the present disclosure, the method further includes: within the duration of the second playing mode, in response to the first playing mode starting operation triggered on the content display interface, displaying the first media content in the first playing mode on the content display interface; and after the playing mode is switched from the second playing mode to the first playing mode, displaying the second preset number of media content identifiers in the content display interface. Therefore, after the user enters the second playing mode to carry out deep consumption on the media content, the consumption entrance of other media contents in the set can still be displayed when the user returns to the first playing mode, so that the user can still watch the contents of other sets in the first playing mode.

In the embodiment of the present disclosure, the first playing mode starting operation can be understood as the operation of indicating the user terminal 110 to display the media content in the first playing mode. The first playing mode can be used for switching the content display interface from the second playing mode to the first playing mode. After the first playing mode starting operation carried out by the user on the content display interface is received, the first media content is displayed on the content display interface in the second playing mode, and it is switched to the first display mode to be displayed on the content display interface.

In the embodiment of the present disclosure, the first playing mode starting operation can be the touch operation directly carried out on the content display interface by the user in the touch mode such as finger, and touch pen, or can be the control operation such as single click or double click carried out on the content display interface by the user through the external input devices such as the mouse and keyboard, and the embodiment of the present disclosure does not limit the specific implementation of the first playing mode starting operation.

In one implementation of the present disclosure, as shown in Fig. 4, a first playing mode starting control 203 is included in the content display interface, and the first playing mode starting operation triggered in the content display interface can be to trigger the first playing mode starting control 203 in the content display interface.

In one implementation of the present disclosure, after the first playing mode is started, the user terminal displays the media content in the first playing mode, and the specific displaying mode can refer to the description in the above embodiments which is not repeated here.

In one implementation of the present disclosure, after the playing mode is switched from the second playing mode to the first playing mode, the second preset number of media content identifiers are displayed in the content display interface. In response to the trigger operation on the media content identifier, the associated media content subset corresponding to the media content identifier can be acquired, so that the media content in the associated media content subset can still be displayed on the content display interface in the first playing mode.

It is to be noted that the function of the media content identifiers in the first playing mode is consistent with the function and the displaying mode of the media content identifiers in the second playing mode, the description mentioned above can be referred and is not repeated here.

In one implementation of the present disclosure, after the playing mode is switched from the second playing mode to the first playing mode, and in response to that the media content displayed in the first playing mode and the media content displayed in the second playing mode are the same media content, the media content is played in the content display interface according to the playing attribute in the second playing mode; and/or after the playing mode is switched from the second playing mode to the first playing mode, and in response to that the media content displayed in the first playing mode and the media content displayed in the second playing mode are not the same media content, the media content is played in the content display interface according to the playing attribute in the first playing mode.

In the embodiment of the present disclosure, in response to that the content display interface displays a media content A in the second playing mode, and after it is switched to the first playing mode, the content display interface still displays the media content A; and in response to that the content display interface displays the media content A in the first playing mode, the playing attribute of the second playing mode is continued, in which the playing attribute includes at least the playing rate, playing progress, playing volume and the like.

In the embodiment of the present disclosure, in response to that in the second playing mode, the content display interface displays a media content B, and after it is switched to the first playing mode, the content display interface displays media content A; and in response to that the media content A is displayed in the first playing mode in the content media interface, the playing attribute of the second playing mode is not continued, and the playing is carried out with a preset playing attribute in the first playing mode.

Fig. 5 is a structural schematic diagram of a media content playing apparatus according to an embodiment of the present disclosure. The embodiment can be applied to the condition of short video playing, the media content playing apparatus can be realized by adopting a software and/or hardware mode, and the media content playing apparatus can be configured to the user terminal 110 in Fig. 1 for execution.

As shown in Fig. 5, the media content playing apparatus provided in the embodiment of the present disclosure mainly includes: a first display module 51, an associated media content subset determination module 52, a second display module 53 and a third display module 54.

The first display module 51 is configured to display a first media content in a first playing mode on a content display interface; the associated media content subset determination module 52 is configured to: under the condition that the first media content belongs to a first media content set, in response to a second playing mode starting operation triggered on the content display interface, determine an associated media content subset meeting a preset relationship with the first media content in the first media content set; the second display module 53 is configured to display the first media content in the second playing mode on the content display interface; and the third display module 54 is configured to, within the duration of the second playing mode, in response to receiving a media content switching command, display a second media content corresponding to the media content switching command in the content display interface.

In one implementation of the present disclosure, the receiving the media content switching command, includes: in response to the trigger operation on the content display interface, receiving the media content switching command; or, in response to a first media content playing completion command, generating and receiving the media content switching command.

In one implementation of the present disclosure, in response to the trigger operation on the content display interface, receiving the media content switching command, includes: in response to a slide operation on the content display interface in a first preset direction, receiving the media content switching command, or, in response to the trigger operation on the media content identifier included in the content display interface, receiving the media content switching command, in which the media content identifier corresponds to the media content in the first media content set.

In one implementation of the present disclosure, the associated media content subset determination module 52 is specifically configured to determine and load a first preset number of media contents included in the first media content set, in which the first preset number of media contents includes the second media content.

In one implementation of the present disclosure, in the first playing mode, the content display interface includes a first interactive control; and the second display module 53 is specifically configured to hide at least one first interactive control on the first media content picture in the content display interface.

In one implementation of the present disclosure, the second display module 53 is specifically configured to hide all components displayed on the first media content picture in the first playing mode in the content display interface, in which the components include the first interactive control.

In one implementation of the present disclosure, in the first playing mode, the content display interface includes the first interactive control; in the second playing mode, the content display interface includes a second interactive control different from the first interactive control, and the first interactive control is configured to execute a first type interactive operation, the second interactive control is configured to execute a second type of interactive operation; the first type interactive operation includes an interactive operation for the media content or between users associated with the media content, and the second type interactive operation includes an adjustment operation corresponding to a playing attribute in the second playing mode.

In one implementation of the present disclosure, the apparatus further includes: a media content set switching module which is configured to: within the duration of the second playing mode, in response to receiving the media set switching command, determine a second media content set corresponding to the media set switching command; a third media content acquisition module which is configured to acquire a third media content included in the second media content set; and a fourth display module which is configured to display the third media content in the content display interface.

In one implementation of the present disclosure, receiving the media set switching command, includes: in response to a slide operation on the content display interface in a second preset direction, receiving the media set switching command; or receiving the media set switching command, includes: in response to the trigger operation on the media set control included in the content display interface, displaying a plurality of media set identifiers; and in response to the trigger operation on the media set identifier, receiving the media set switching command.

In one implementation of the present disclosure, the second display module 53 is specifically configured to display a second preset number of media content identifiers in the content display interface, and the display sequence of the media content identifiers is determined by the sequence of the corresponding media content in the first media content set.

In one implementation of the present disclosure, the media content identifier is used for displaying the playing progress of the media content corresponding to the media content identifier.

In one implementation of the present disclosure, in response to that the media content displayed in the content display interface is the media content corresponding to the target media content identifier, a new media content identifier is acquired and displayed in response to receiving a media content identifier updating command; the target media content identifier is a first media content identifier in the current content display interface, or the last media content identifier in the current content display interface; receiving the media content identifier updating command, includes: in response to the slide operation on the content display interface in the first preset direction, receiving the media content identifier updating command; or after receiving the media content playing completion command corresponding to the target media content identifier, generating and receiving the media content identifier updating command.

In one implementation of the present disclosure, the apparatus further includes a media content loading module which is configured to: in response to that the number of media contents which are loaded and not played in the current media content set is smaller than a third preset number, load a fourth preset number of media contents from the current media content set.

In one implementation of the present disclosure, the apparatus further includes: a playing mode switching module which is configured to: within the duration of the second playing mode, in response to the first playing mode starting operation triggered on the content display interface, display the first media content in the first playing mode on the content display interface; and a media content identifier display module which is configured to: after the playing mode is switched from the second playing mode to the first playing mode, display the second preset number of media content identifiers in the content display interface.

In an implementation of the present disclosure, after the playing mode is switched from the second playing mode to the first playing mode, and in response to that the media content displayed in the first playing mode and the media content displayed in the second playing mode are the same media content, the media content is played in the content display interface according to the playing attribute in the second playing mode; and/or after the playing mode is switched from the second playing mode to the first playing mode, and in response to that the media content displayed in the first playing mode and the media content displayed in the second playing mode are not the same media content, the media content is played in the content display interface according to the playing attribute in the first playing mode.

The media content playing apparatus provided by the embodiments of the present disclosure can execute the steps executed in the media content playing method provided by the embodiments of the present disclosure, and the execution steps and the beneficial effects are not repeated here.

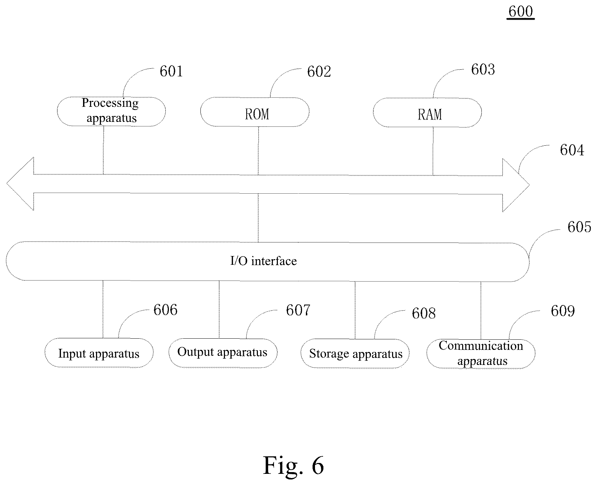

Fig. 6 is a structural schematic diagram of an electronic device according to an embodiment of the present disclosure. By specifically referring to Fig. 6 below, it shows the structural schematic diagram suitable for realizing an electronic device 600 in the embodiment of the present disclosure. The electronic device 600 in the embodiment of the present disclosure can include but is not limited to mobile terminals such as mobile phones, laptops, digital broadcast receivers, PDAs (personal digital assistants), PADs (tablet personal computers), PMPs (portable multimedia players), vehicle-mounted terminals (such as vehicle-mounted navigation terminals), and wearable terminal devices, and immobile terminals such as digital TVs, desktop computers, and smart home devices. The electronic device shown in Fig. 6 is only one example, and does not bring any limitation to the functions and the application range of the embodiment of the present disclosure.

As shown in Fig. 6, the electronic device 600 may include a processing apparatus (e.g., a central processor, and a graphics processor) 601 that can perform various appropriate actions and processes according to a program stored in a read-only memory (ROM) 602 or a program loaded from a storage apparatus 608 into a Random Access Memory (RAM) 603 to implement the media content playing method according to the embodiment of the present disclosure. In the RAM 603, various programs and data required for operation of the electronic device 600 are also stored. The processing apparatus 601, ROM 602, and RAM 603 are connected to each other through a bus 604. An input/output (I/O) interface 605 is also connected to the bus 604.

Generally, the following devices may be connected to the I/O interface 605: an input apparatus 606 including, for example, a touch screen, a touchpad, a keyboard, a mouse, a camera, a microphone, an accelerometer, a gyroscope, etc.; an output apparatus 607 including, for example, a liquid crystal display (LCD), a speaker, a vibrator, etc.; a storage apparatus 608 including, for example, a magnetic tape, a hard disk, etc.; and a communication apparatus 609. The communication apparatus 609 may allow the electronic device 600 to communicate wirelessly or wired with other devices to exchange data. Although Fig. 6 shows the electronic device 600 with various apparatuses, it is to be understood that it is not required to implement or have all the apparatuses shown. More or fewer apparatuses may be implemented or have alternatively.

In particular, according to the embodiments of the present disclosure, the process described above with reference to the flowchart can be implemented as a computer software program. For example, an embodiment of the present disclosure includes a computer program product, which includes a computer program carried on a non-transitory computer-readable medium, and the computer program contains a program code for executing the method shown in the flowchart, thereby implementing the media content playing method as described above. In such embodiment, the computer program can be downloaded and installed from the network through the communication apparatus 609, or installed from the storage apparatus 608, or installed from the ROM 602. In response to that the computer program is executed by the processing apparatus 601, the above-mentioned functions defined in the method embodiments of the present disclosure are executed.

It is to be noted that the computer-readable medium described above of the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus or instrument, or any combination thereof. More specific examples of the computer-readable storage media may include, but not limited to, an electrical connector, a portable computer disk, a hard disk, a Random Access Memory (RAM), a Read Only Memory (ROM), an erasable programmable read only memory (EPROM or flash memory), an optical fiber, a portable compact disk read only memory (CD-ROM), an optical storage device, a magnetic storage device, or any suitable combination thereof having one or more wires. In the present disclosure, the computer-readable storage medium may be any tangible medium containing or storing a program that may be used by or in combination with a command execution system, apparatus or instrument. In the present disclosure, the computer-readable signal medium may include a data signal that propagates in a baseband or as part of a carrier, in which, the computer-readable program code is carried. Such propagated data signal may take a variety of forms, including, but not limited to, an electromagnetic signal, an optical signal, or any suitable combination thereof. The computer-readable signal medium may also be any computer-readable medium other than a computer-readable storage medium that may transmit, propagate, or transmit a program for use by or in combination with an instruction execution system, apparatus or instrument. The program code contained on the computer-readable medium may be transmitted with any suitable medium, including, but not limited to, an electrical wire, an optical cable, an RF (radio frequency), or any suitable combination thereof.

In some implementations, a client and the server may communicate using any currently known or future developed network Protocol, such as HTTP (HyperText Transfer Protocol), and may interconnect with digital data communications (e.g., communications networks) of any form or medium. Examples of communications networks include local area networks ("LANs"), wide area networks ("WANs"), Internet networks (e.g., Internet) and end-to-end networks (e.g., ad hoc end-to-end networks), and any currently known or future developed networks.

The computer-readable medium may be contained in the electronic device described above; or may be present alone, without being assembled into the electronic device.

The computer-readable medium carries one or more programs, and in response to that the one or more programs are executed by the electronic device, the electronic device is configured to: display a first media content in a first playing mode on a content display interface; in response to a second playing mode starting operation triggered on the content display interface, determine an associated media content subset meeting a preset relationship with the first media content in the first media content set, wherein the first media content belongs to a first media content set; display the first media content in a second playing mode on the content display interface; and within a duration of the second playing mode, in response to a media content switching command being received, display a second media content corresponding to the media content switching command in the content display interface, wherein the second media content belongs to the associated media content subset.

Optionally, in response to that the one or more programs are executed by the electronic device, the electronic device can also execute other steps described in the above embodiments.

The computer program code for performing the operations of the present disclosure may be written in one or more programming languages or a combination thereof, including, but not limited to, object-oriented programming languages, such as Java, Smalltalk, C++, and conventional procedural programming languages, such as "C" programming language or similar programming languages. The program code may be executed entirely on the user computer, partially on the user computer, as a separate software package, partially on the user computer and partially on a remote computer, or entirely on a remote computer or server. In response to involving a remote computer, the remote computer may be connected to the user computer through any type of network, including the local area network (LAN) or the wide area network (WAN), or, may be connected to an external computer (e.g., via Internet service provider using Internet).

The flowchart and block diagram in the figures illustrate the architecture, functions and operations that may be implemented by systems, methods and computer program products according to the various embodiments of the present disclosure. In this regard, each block in the flowchart or block diagram may represent a module, program segment, or part of code, and the module, program segment, or part of code contains one or more executable instructions for implementing a prescribed logical function. It is also to be noted that in some implementations as an alternative, the functions marked in the blocks may also occur in a different order than in the figure. For example, two blocks represented in succession may actually be executed substantially in parallel, and sometimes in the opposite order, depending on the function involved. It is also to be noted that each block in the block diagram and/or flowchart, and the combination of blocks in the block diagram and/or flowchart, may be implemented in a dedicated hardware-based system that executes the prescribed function or operation, or may be implemented in a combination of dedicated hardware and computer instructions.

The units described in the embodiments of the present disclosure can be implemented either in software, or in hardware. The names of the units do not form a limitation to the unit itself in some cases.

The functions described above can be performed at least in part by one or more hardware logic components. For example, non-limiting, exemplary types of hardware logic components that can be used include Field Programmable Gate Arrays (FPGAs), Application Specific Integrated Circuits (ASICs), Application Specific Standard Products (ASSPs), system-on-chips (SOCs), Complex Programmable Logic Devices (CPLDs), etc.

In the context of the present disclosure, the machine-readable medium may be a tangible medium that may contain or store a program for use by or in conjunction with an instruction execution system, apparatus, or device. The machine-readable medium may be a machine-readable signal medium or a machine-readable storage medium. The machine-readable medium may include, but is not limited to, the electronic, magnetic, optical, electromagnetic, infrared, or semiconductor system, apparatus, or device, or any suitable combination of the foregoing. A more specific example of the machine-readable storage medium may include an electrical connector based on one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

According to one or more embodiments of the present disclosure, the present disclosure provides a media content playing method, which includes: displaying a first media content in a first playing mode on a content display interface; in response to a second playing mode starting operation triggered on the content display interface, determining an associated media content subset meeting a preset relationship with the first media content in the first media content set, wherein the first media content belongs to a first media content set; displaying the first media content in a second playing mode on the content display interface; and within a duration of the second playing mode, in response to a media content switching command being received, displaying a second media content corresponding to the media content switching command in the content display interface, wherein the second media content belongs to the associated media content subset.

According to one or more embodiments of the present disclosure, the present disclosure provides a media content playing apparatus, which includes: a first display module, configured to display a first media content in a first playing mode on a content display interface; an associated media content subset determination module, configured to: in response to a second playing mode starting operation triggered on the content display interface, determine an associated media content subset meeting a preset relationship with the first media content in the first media content set, wherein the first media content belongs to a first media content set; a second display module, configured to display the first media content in the second playing mode on the content display interface; and a third display module, configured to, within a duration of the second playing mode, in response to a media content switching command being received, display a second media content corresponding to the media content switching command in the content display interface, wherein the second media content belongs to the associated media content subset.

According one or more embodiments of the present disclosure, the present disclosure provides an electronic device, including:
one or more processors; and
a memory for storing one or more programs;
in response to that the one or more programs are executed by the one or more processors, the one or more processors implement the media content playing method provided by the present disclosure.

According to one or more embodiments of the present disclosure, the present disclosure provides a computer-readable storage medium on which a computer program is stored, and the program is executed by the processor to implement any one of the above media content playing method provided by the present disclosure.

An embodiment of the present disclosure further provides a computer program product which includes a computer program or command which is executed by a processor to implement the media content playing method.

The above description only relates to some preferred embodiments of the present disclosure and explanations of the technical principles applied. Technicians in this field should understand that the scope of the present disclosure is not limited to technical solutions formed by specific combinations of the above technical features, and should also cover other technical solutions formed by arbitrary combinations of the above technical features or their equivalent features without departing from the above disclosed concept. For example, a technical solution formed by replacing the above features with (but not limited to) technical features with similar functions disclosed in the present disclosure.

In addition, although the operations are depicted in a specific order, this should not be understood as requiring these operations to be executed in the specific order shown or in a sequential order. Under certain circumstances, multitasking and parallel processing may be advantageous. Similarly, although several specific implementation details are included in the above discussion, they should not be interpreted as limiting the scope of the present disclosure. Certain features described in the context of individual embodiments can also be combined and implemented in a single embodiment. On the contrary, various features described in the context of a single embodiment can also be implemented individually or in any suitable sub combination in multiple embodiments.

Although the subject matter has been described using language specific to structural features and/or method logic actions, it should be understood that the subject matter defined in the appended claims is not necessarily limited to the specific features or actions described above. On the contrary, the specific features and actions described above are merely exemplary forms of implementing the claims.

## Claims

1. A media content playing method, comprising:
displaying a first media content in a first playing mode on a content display interface;
in response to a second playing mode starting operation triggered on the content display interface, determining an associated media content subset meeting a preset relationship with the first media content in the first media content set, wherein the first media content belongs to a first media content set;
displaying the first media content in a second playing mode on the content display interface; and
within a duration of the second playing mode, in response to a media content switching command being received, displaying a second media content corresponding to the media content switching command in the content display interface, wherein the second media content belongs to the associated media content subset.

2. The method according to claim 1, wherein the media content switching command being received comprises:
in response to the trigger operation on the content display interface, the media content switching command being received; or,
in response to a playing completion command for the first media content, the media content switching command being generated and received.

3. The method according to claim 2, wherein in response to the trigger operation on the content display interface, the media content switching command being received, comprises:
in response to a slide operation on the content display interface in a first preset direction, the media content switching command being received; or,
in response to a trigger operation on a media content identifier in the content display interface, the media content switching command being received, wherein the media content identifier corresponds to a media content in the first media content set.

4. The method according to any one of claims 1 to 3, wherein determining the associated media content subset meeting the preset relationship with the first media content in the first media content set, comprises:
determining and loading a first preset number of media contents in the first media content set, wherein the first preset number of media contents comprises the associated media content subset.

5. The method according to any one of claims 1 to 4, wherein in the first playing mode, the content display interface comprises a first interactive control; and wherein displaying the first media content in the second playing mode on the content display interface, comprises:
hiding a first interactive control on at least one first media content picture in the content display interface.

6. The method according to claim 5, wherein hiding a first interactive control on at least one first media content picture in the content display interface, comprises:
hiding all components displayed on the first media content picture in the first playing mode in the content display interface, wherein the components comprise the first interactive control.

7. The method according to any one of claims 1 to 6, wherein in the first playing mode, the content display interface comprises a first interactive control; in the second playing mode, the content display interface comprises a second interactive control different from the first interactive control, and the first interactive control is configured to execute a first type interactive operation, the second interactive control is configured to execute a second type interactive operation; the first type interactive operation comprises an interactive operation for media contents or between users associated with the media contents; and the second type interactive operation comprises an adjustment operation corresponding to a playing attribute in the second playing mode.

8. The method according to any one of claims 1 to 7, further comprising:
within the duration of the second playing mode, in response to a media set switching command being received, determining a second media content set corresponding to the media set switching command;
acquiring a third media content in the second media content set; and
displaying the third media content in the content display interface.

9. The method according to claim 8, wherein the media set switching command being received comprises:
in response to a slide operation on the content display interface in a second preset direction, the media set switching command being received; or
the media set switching command being received comprises:
in response to a trigger operation on a media set control in the content display interface, a plurality of media set identifiers being displayed; and
in response to a trigger operation on a media set identifier, the media set switching command being received.

10. The method according to claim 1 or 2, wherein displaying the first media content in the second playing mode on the content display interface, comprises:
displaying a second preset number of media content identifiers corresponding to the associated media content subset in the content display interface, wherein a display sequence of the media content identifiers is determined by a sequence of corresponding media content in the first media content set.

11. The method according to claim 10, wherein a media content identifier is used for displaying a playing progress of corresponding media content.

12. The method according to claim 10 or 11, wherein in response to media content displayed in the content display interface corresponding to a target media content identifier, acquiring and displaying a new media content identifier in response to a media content identifier updating command being received, wherein the target media content identifier is a first media content identifier displayed currently in the content display interface, or, a last media content identifier displayed currently in the content display interface;
wherein the media content identifier updating command being received comprises: in response to a slide operation on the content display interface in a first preset direction, the media content identifier updating command being received; or
after receiving a playing completion command for a media content corresponding to the target media content identifier, the media content identifier updating command being generated and received.

13. The method according to any one of claims 1 to 12, further comprising:
in response to a number of loaded and unplayed media content in a current media content set is less than a third preset number, loading a fourth preset number of media contents from the current media content set.

14. The method according to any one of claims 1 to 13, further comprising:
within the duration of the second playing mode, in response to a first playing mode starting operation triggered on the content display interface, displaying the first media content in the first playing mode on the content display interface; and
after switching the second playing mode to the first playing mode, displaying a second preset number of media content identifiers corresponding to the associated media content subset in the content display interface.

15. The method according to claim 14, wherein after switching the second playing mode to the first playing mode, and in response to a media content displayed in the first playing mode and a media content displayed in the second playing mode being the same media content, the media content is played in the content display interface according to a playing attribute of the second playing mode; and/or
after switching the second playing mode to the first playing mode, and in response to a media content displayed in the first playing mode and a media content displayed in the second playing mode being not the same media content, the media content is played in the content display interface according to a playing attribute of the first playing mode.

16. A media content playing apparatus, comprising:
a first display module, configured to display a first media content in a first playing mode on a content display interface;
an associated media content subset determination module, configured to: in response to a second playing mode starting operation triggered on the content display interface, determine an associated media content subset meeting a preset relationship with the first media content in the first media content set, wherein the first media content belongs to a first media content set;
a second display module, configured to display the first media content in the second playing mode on the content display interface; and
a third display module, configured to, within a duration of the second playing mode, in response to a media content switching command being received, display a second media content corresponding to the media content switching command in the content display interface, wherein the second media content belongs to the associated media content subset.

17. An electronic device, comprising:
one or more processors; and
a memory for storing one or more programs, wherein
the one or more programs, when executed by the one or more processors, cause the one or more processors to implement the media content playing method according to any one of claims 1 to 15.

18. A computer-readable storage medium on which a computer program is stored, wherein the computer program, when executed by a processor, causes the processor to implement the media content playing method according to any one of claims 1 to 15.

19. A computer program product, comprising a computer program or command, wherein the computer program or command, when executed by a processor, causes the processor to implement the media content playing method according to any one of claims 1 to 15.
